Europäisches Patentamt

European Patent Office

Office européen des brevets

(19)

(11) Veröffentlichungsnummer: **0 285 770 B1**

(12) # EUROPÄISCHE PATENTSCHRIFT

(45) Veröffentlichungstag der Patentschrift:
17.10.90

(51) Int. Cl.⁵: **F16D 43/20**, F16D 43/286

(21) Anmeldenummer: **88102040.8**

(22) Anmeldetag: **12.02.88**

(54) **Sicherheitskupplung für drehende Antriebe.**

(30) Priorität: **02.04.87 CH 1271/87**

(43) Veröffentlichungstag der Anmeldung:
**12.10.88 Patentblatt 88/41**

(45) Bekanntmachung des Hinweises auf die Patenterteilung:
**17.10.90 Patentblatt 90/42**

(84) Benannte Vertragsstaaten:
**CH DE ES FR GB GR IT LI NL SE**

(56) Entgegenhaltungen:
**CH-A- 520 530
DE-A- 2 239 694
DE-B- 1 179 426
GB-A- 1 599 971
US-A- 2 963 134
US-A- 3 298 488
US-A- 4 081 063**

(73) Patentinhaber: **ELPATRONIC AG, Baarerstrasse 117,
CH-6300 Zug(CH)**

(72) Erfinder: **Stieger, Othmar, Schuermattstrasse 18,
CH-8963 Kindhausen(CH)**

(74) Vertreter: **Hotz, Klaus, Dipl.-El.-Ing. / ETH, c/o
SOUDRONIC AG Industriestrasse 35 Postfach 11,
CH-8962 Bergdietikon(CH)**

## Beschreibung

Die Erfindung betrifft eine Sicherheitskupplung für drehende Antriebe, mit

- einer treibenden und einer getriebenen Nabe, die in bezug zueinander drehbar gelagert sind,
- zwei Rastenanordnungen, die mit je einer der Naben zu gemeinsamer Drehung verbunden sind,
- mindestens einem Rastkörper, der in einer eingerasteten Stellung die beiden Rastenanordnungen miteinander kuppelt und eine vom übertragenen Drehmoment abhängige axiale Ausrückkraft erzeugt,
- einer Spannvorrichtung, die einen Zylinderraum aufweist, dem ein Fluid unter Druck von einem Einlass aus zuführbar ist, solange der Rastkörper eingerastet ist, um eine Einrückkraft zu erzeugen, die von der Ausrückkraft bei Überschreitung eines bestimmten Drehmoments überwindbar ist, und
- einem Steuerschieber, der mit dem Rastkörper zu gemeinsamer axialer Verschiebung verbunden ist und den Zylinderraum an einen Entlastungskanal anschliesst, wenn der Rastkörper wenigstens teilweise ausgerastet ist.

Eine Sicherheitskupplung dieser Gattung ist aus der US-A 2 963 134 bekannt. Bei jener Ausführung ist der Rastkörper Bestandteil der getriebenen Nabe und trägt somit zu deren trägen Masse bei. Der Zylinderraum für das Fluid ist ganz von der treibenden Nabe bzw. von der mit ihr verbundenen Rastenanordnung umschlossen. Der Steuerschieber begrenzt den Zylinderraum einseitig. Er ist zur axialen Bewegung mit dem Rastkörper der getriebenen Nabe verbunden und trägt eine mit der treibenden Nabe zusammenwirkende Ringdichtung.

Der Erfindung liegt die Aufgabe zugrunde, eine Sicherheitskupplung für drehende Antriebe zu schaffen, bei der die rotierende träge Masse vor allem der getriebenen Kupplungsteile gering ist und bei der ferner bewegliche Dichtungen zwischen getriebenen und treibenden Kupplungsteilen entfallen.

Diese Aufgabe ist erfindungsgemäss dadurch gelöst, dass der Zylinderraum radial nach aussen durch ein federndes Wellrohr begrenzt ist, welches den Steuerschieber mit einem in axialer Richtung ortsfesten, mit der treibenden Nabe verbundenen Kupplungsteil verbindet, und dass der Steuerschieber den Zylinderraum bei wenigstens teilweise ausgerastetem Rastkörper vom Einlass trennt.

Ein solches Wellrohr hat selber eine im Verhältnis zur Grösse des von ihm umschlossenen Zylinderraumes geringe träge Masse und lässt sich auf einfache Weise, z.B. durch Schweissen oder mit massearmen Bauteilen, beispielsweise handelsüblichen Spannschellen, zuverlässig dicht am Steuerschieber einerseits und an dem in axialer Richtung ortsfesten Kupplungsteil andererseits befestigen.

Vorzugsweise ist das Wellrohr so beschaffen, dass es mit dem gesamten von der Sicherheitskupplung zu übertragenden Drehmoment belastbar ist. Es ist deshalb besonders vorteilhaft, wenn das Wellrohr aus Federstahl oder anderem hoch belastbarem Material (rostfreiem Stahl) besteht.

Ausserdem ist es zweckmässig, wenn das Wellrohr mit dem einen Ende an einem Flansch des ortsfesten Kupplungsteils und mit einem entgegengesetzten Ende an einem Flansch des Steuerschiebers befestigt ist.

Es ist ferner zweckmässig, wenn der Rastkörper oder – falls mehrere Rastkörper vorhanden sind – die Gesamtheit der Rastkörper an einer der beiden Rastenanordnungen einstückig ausgebildet ist. Es ist aber auch, wie bei zwei der eingangs beschriebenen Sicherheitskupplungen, eine körperliche Trennung zwischen dem Rastkörper oder den Rastkörpern einerseits und jeder der beiden Rastenanordnungen andererseits möglich.

Zweckmässigerweise ist der Rastkörper – oder die Gesamtheit der Rastkörper – von einer Feder ständig im Sinne des Ausrückens belastet und wird von dieser Feder vollständig ausgerückt gehalten, wenn der Zylinderraum drucklos ist.

Die Feder kann von dem federnden Wellrohr und/oder einer gesonderten Feder gebildet sein.

Ferner ist es zweckmässig, wenn der Zylinderraum durch einen Bypass, der von einem Hilfssteuerglied gesteuert ist, mit dem Einlass verbindbar ist.

Diese Ausgestaltung kann dadurch weitergebildet sein, dass der Steuerschieber ein rohrförmiger Kolben ist, der auf einem axialen Fortsatz einer der beiden Naben geführt ist, und das Hilfssteuerglied in einer zentralen axialen Bohrung des Fortsatzes ebenfalls axial verschiebbar geführt ist.

Dabei ist es schliesslich vorteilhaft, wenn das Hilfssteuerglied einen Druckknopf aufweist, der axial aus einer freien Stirnfläche des Fortsatzes herausragt.

Ein Ausführungsbeispiel der Erfindung wird im folgenden anhand schematischer Zeichnungen mit weiteren Einzelheiten erläutert. Die Zeichnungen zeigen, jeweils in Schrägansicht und teilweise im axialen Schnitt, eine Sicherheitskupplung in drei verschiedenen Stellungen, nämlich

Fig. 1 in eingerückter Stellung
Fig. 2 in ausgerückter Stellung und
Fig. 3 in ausgerückter, jedoch zu Einrücken bereiter Stellung.

Die dargestellte Sicherheitskupplung hat eine treibende Nabe 10, die längs ihrer Achse A teilweise hohlgebohrt ist und sich mittels einer Klemmvorrichtung 12 an einer Ausgangswelle eines nicht dargestellten Pendelgetriebes bekannter Bauart befestigen und von dieser um einen bestimmten Winkel hin- und herpendelnd antreiben lässt. Auf der treibenden Nabe 10 ist mittels zweier Wälzlager 14, die im dargestellten Beispiel Rillenkugellager sind, eine getriebene Nabe 16 drehbar gelagert.

Von der getriebenen Nabe 16 ragt radial ein Hebel 18 weg, der beispielsweise eine intermittierend arbeitende Transportvorrichtung bekannter Bauart antreiben kann.

Die treibende Nabe 10 hat einen axialen Fortsatz 20, der nahe seinem Ende einen kegelförmigen Bereich 22 und in einem Gewindezapfen 24 endet. Auf dem kegelförmigen Bereich 22 ist mittels einer auf den Gewindezapfen 24 aufgeschraubten Mutter 26 ein scheibenförmiges Kupplungsteil 28 befestigt, das einen radial nach aussen ragenden Flansch 30 hat. Der Flansch 30 begrenzt einen zylindrischen Abschnitt des Fortsatzes 20, auf dem ein kolbenartiger, rohrförmiger Steuerschieber 32 axial verschiebbar ist.

Der Steuerschieber 32 hat an seinem vom Flansch 30 abgewandten Ende einen Flansch 34. Die beiden Flansche 30 und 34 begrenzen einen Zylinderraum 36, der radial nach aussen hin von einem an diesen beiden Flanschen dicht befestigten federnden Wellrohr 38 umschlossen ist. Das Wellrohr 38 ist in axialer Richtung elastisch zusammendrückbar und dehnbar, ist aber verdrehsteif, so dass die Flansche 30 und 34 sich nicht in bezug zueinander um die Achse A drehen können.

Im dargestellten Beispiel besteht das Wellrohr 38 aus Federstahl und bildet die einzige drehmomentübertragende Verbindung zwischen den Flanschen 30 und 34, an denen es mit je einem Ende befestigt, vorzugsweise angeschweisst ist. Deshalb wird das gesamte Drehmoment, mit dem die Sicherheitskupplung belastet wird, über das Wellrohr 38 übertragen.

Am Flansch 34 des Steuerschiebers 32 ist eine Rastenanordnung 40 befestigt; an dieser sind stirnseitig Rastkörper 42 ausgebildet, die durch eine diametrale Nut voneinander getrennt sind. Dieser Rastenanordnung 40, die der treibenden Nabe 10 zugeordnet ist, steht axial eine komplementäre Rastenanordnung 44 gegenüber, die an der getriebenen Nabe 16 ausgebildet ist.

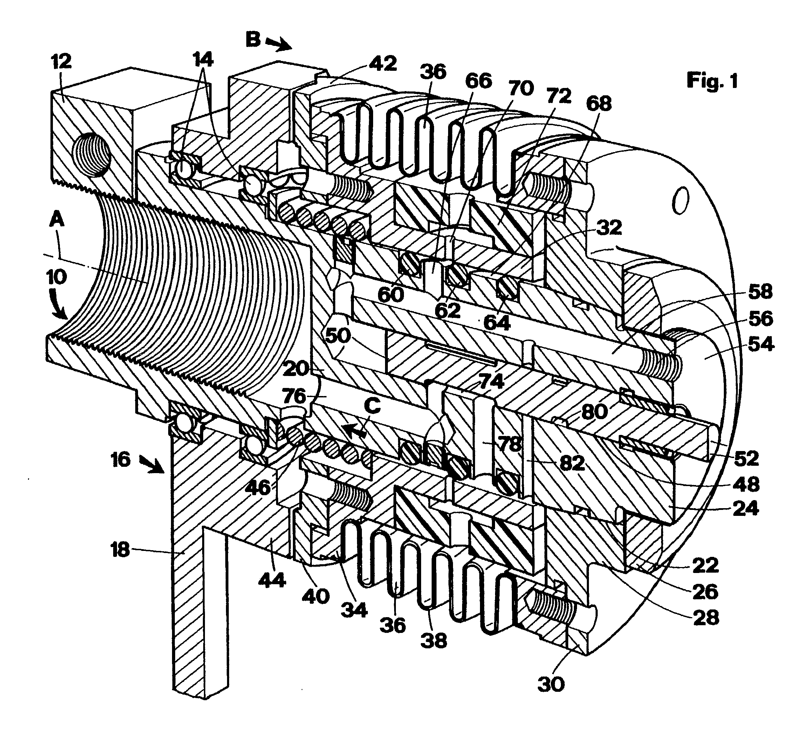

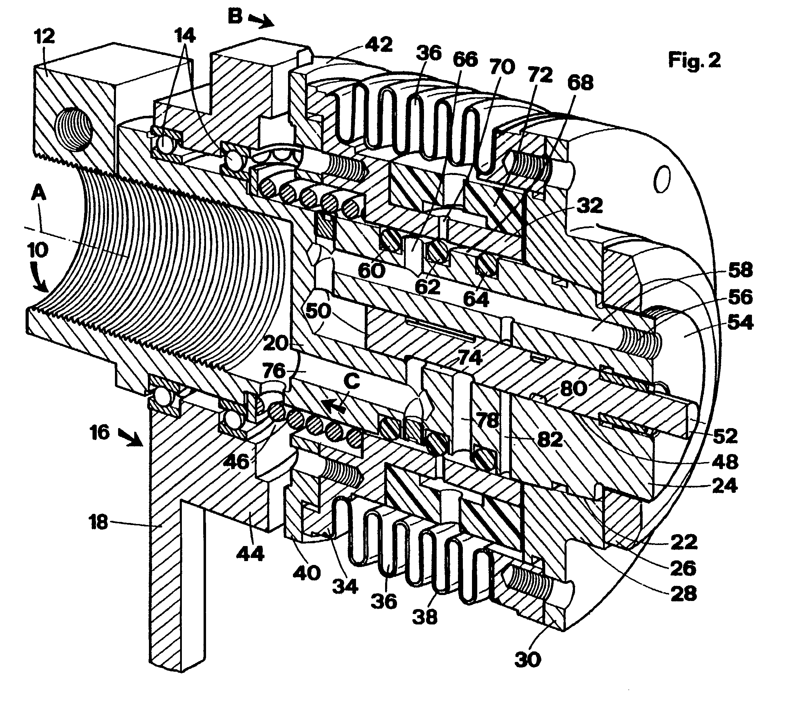

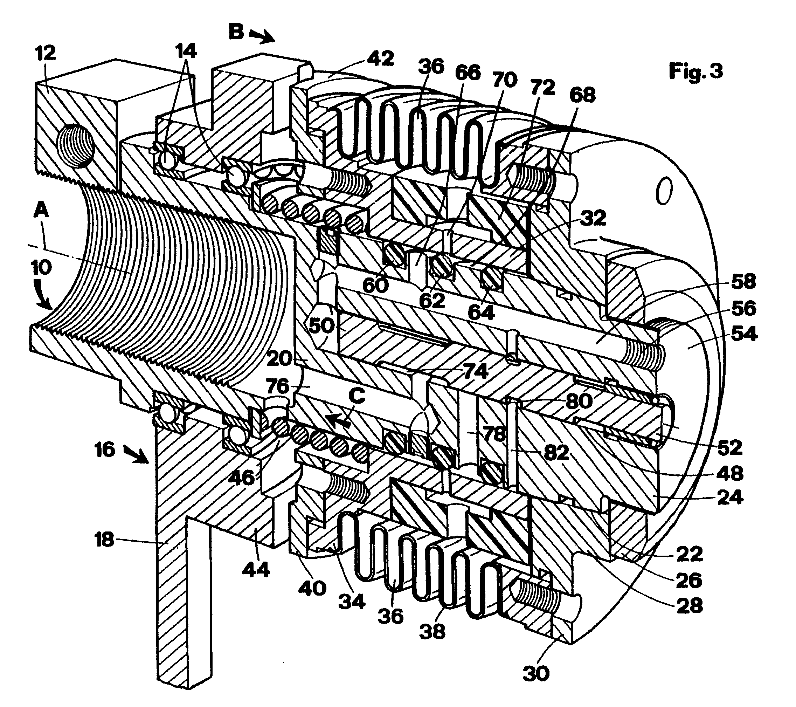

Der Steuerschieber 32 wird ständig von einer Feder 46 - dargestellt ist eine den Forsatz 20 umschlingede Schraubenfeder - derart belastet, dass er bestrebt ist, seine in Fig. 1 abgebildete Stellung zu verlassen und sich, wie in Fig. 2 und 3 dargestellt, an das in axialer Richtung ortsfeste Kupplungsteil 28 anzulegen. In gleicher Richtung wirkt eine Ausrückkraft B, die an aneinanderliegenden schrägen Flanken der Rastkörper 42 einerseits und der Rastenordnung 44 andererseits entsteht, wenn die Kupplung ein Drehmoment überträgt; die Ausrückkraft B ist bei gerader Flankenform dem Drehmoment proportional. Nähere Erläuterungen hierzu erscheinen angesichts des oben erwähnten Standes der Technik entbehrlich.

Der Fortsatz 20 hat eine zentrale axiale Bohrung 48, die ein geschlossenes inneres Ende hat und ein kolbenartiges Hilfssteuerglied 50 aufnimmt. Ein Ende des Hilfssteuergliedes 50 ist als Druckknopf 52 ausgebildet, der je nach Stellung des Hilfssteuergliedes mehr oder weniger weit über eine ebene Stirnfläche 54 des Fortsatzes 20 hinausragt. An derselben Stirnfläche 54 ist, radial gegen die Bohrung 48 versetzt, ein Einlass 56 ausgebildet, an das eine flexible Druckluft- oder Druckflüssigkeitsleitung anschliessbar ist. Vom Einlass 46 aus erstreckt sich ein achsparalleler Kanal 58 ungefähr soweit nach innen wie die zentrale Bohrung 48.

Der Fortsatz 20 trägt in einem mittleren Bereich drei in axialen Abständen voneinander angeordnete ringförmige Dichtungen 60, 62 und 64. Zwischen der axial inneren Dichtung 60 und der mittleren Dichtung 62 ist ein Ringraum 66 ausgebildet, während zwischen der mittleren Dichtung 62 und der axial äusseren Dichtung 64 ein weitere Ringraum 68 ausgebildet ist. Der Ringraum 66 ist mit dem achsparallelen Kanal 58 ständig verbunden und ist bei eingerückter Kupplung gemäss Fig. 1 durch Steuerlöcher 70 im Steuerschieber 32 hindurch auch mit dem Zylinderraum 36 verbunden ist.

Der Zylinderraum 36 enthält eine gelochten Füllkörper 72 aus besonders leichtem Werkstoff, vorzugsweise aufgeschäumtem Kunststoff, der die Aufgabe hat, das mit einem Fluid füllbare Volumen des Zylinderraums 36 zu vermindern.

Das Hilfssteuerglied 50 hat eine breite Ringnut 74, die mit einem Entlastungskanal 76 im Fortsatz 20 verbunden ist, solange das Hilfssteuerglied 50, bei eingerückter oder ausgerückter Kupplung, seine in Fig. 1 und 2 abgebildete Ruhestellung einnimmt. Der Entlastungskanal 76 mündet in die freie Umgebung, wenn die Kupplung pneumatisch betätigbar ist; falls eine hydraulische Betätigung vorgesehen sein sollte, müsste der Entlastungskanal 76 an einen Auffangbehälter angeschlossen werden. Die breite Ringnut 74 ist bei eingerückter Kupplung gemäss Fig. 1 sowie bei einrückbereiter Kupplung gemäss Fig. 2 ferner über eine radiale Bohrung 78 im Fortsatz 20 mit dem Ringraum 68 zwischen den Dichtungen 62 und 64 verbunden.

Das Hilfssteuerglied 50 hat ferner, axial ausserhalb der breiten Ringnut 74, eine schmale Ringnut 80, die bei einrückbereiter Kupplung gemäss Fig. 3 den achsparallelen Kanal 58 über eine radiale Bohrung 82 im Fortsatz 20 mit dem Zylinderraum 36 verbindet.

Ausgehend von der eingerückten Stellung gemäss Fig. 1 bewirkt eine Belastung der Kupplung mit einem Drehmoment, dass an den miteinander zusammenwirkenden schrägen Flanken der Rastenanordnung 40 samt ihren Rastkörpern 42 einerseits und der Rastenanordnung 44 andererseits eine Ausrückkraft B entsteht, die gemeinsam mit der Kraft der Feder 46 grösser ist als die am Steuerschieber 32 wirksame pneumatische oder hydraulische Einrückkraft C. Infolgedessen nähert sich der Steuerschieber 32 dem Kupplungsteil 28. Dabei überfahren die Steuerlöcher 70 die mittlere Dichtung 62, so dass der Zylinderraum 36 vom achsparallelen Kanal 58 getrennt und über den Ringraum 68 sowie die breite Ringnut 74 mit dem Entlastungskanal 76 verbunden wird.

Infolgedessen wird der Zylinderraum 36 schnell drucklos, so dass der Steuerschieber 32 von der Feder 46 gemäss Fig. 2 gegen das Kupplungsteil 28 geschoben wird. Die Kupplung ist nun vollständig ausgerückt. Das Hilfssteuerglied 50 hat dabei seine Stellung nicht verändert, denn nach wie vor ist das innere Ende der zentralen Bohrung 48 über den achsparallelen Kanal 48 mit dem Einlass 56 verbunden und steht somit unter Druck, der das Hilfssteuerglied 50 in seiner Ruhestellung, einer axial äusseren Anschlagstellung, hält.

Wenn die Kupplung wieder eingerückt werden soll, wird mit einer von aussen, beispielsweise mit einem Finger, aufgebrachten Kraft der Druckknopf 52 nach innen gedrückt, so dass das Hilfssteuerglied 50 in seine in Fig. 3 abgebildete Stellung gelangt. In dieser Stellung unterbricht das Hilfssteuerglied 50 die Verbindung zwischen der radialen Bohrung 78 und dem Entlastungskanal 76. Gleichzeitig verbindet das Hilfssteuerglied 50 über seine schmale Ringnut 80 den achsparallelen Kanal 58 mit der radialen Bohrung 82, so dass ein Bypass entsteht, über den Fluid unter Druck vom Einlass 56 in den Zylinderraum 36 strömt. Infolgedessen entsteht wieder die Einrückkraft C, die den Steuerschieber 32 vom Flansch 30 weg verschiebt, so dass die Rastenanordnung 40 samt ihren Rastkörpern 42 wieder in die Rastenanordnung 44 eingreift, wodurch die Naben 10 und 16 erneut miteinander gekuppelt werden.

**Patentansprüche**

1. Sicherheitskupplung für drehende Antriebe, mit
– einer treibenden und einer getriebenen Nabe (10, 16), die in bezug zueinander drehbar gelagert sind,
– zwei Rastenanordnungen (40, 44), die mit je einer der Naben (10, 16) zu gemeinsamer Drehung verbunden sind,
– mindestens einem Rastkörper (42), der in einer eingerasteten Stellung die beiden Rastenanordnungen (40, 44) miteinander kuppelt und eine vom übertragenen Drehmoment abhängige axiale Ausrückkraft (B) erzeugt,
– einer Spannvorrichtung, die einen Zylinderraum (36) aufweist, dem ein Fluid unter Druck von einem Einlass (56) aus zuführbar ist, solange der Rastkörper (42) eingerastet ist, um eine Einrückkraft (C) zu erzeugen, die von der Ausrückkraft (B) bei Überschreitung eines bestimmten Drehmoments überwindbar ist, und
– einem Steuerschieber (32), der mit dem Rastkörper (42) zu gemeinsamer axialer Verschiebung verbunden ist und den Zylinderraum (36) an einen Entlastungskanal (76) anschliesst, wenn der Rastkörper (42) wenigstens teilweise ausgerastet ist,
dadurch gekennzeichnet, dass der Zylinderraum (36) radial nach aussen durch ein federndes Wellrohr (38) begrenzt ist, welches den Steuerschieber (32) mit einem in axialer Richtung ortsfesten, mit der treibenden Nabe (10) verbundenen Kupplungsteil (28) verbindet, und dass der Steuerschieber (32) den Zylinderraum (36) bei wenigstens teilweise ausgerastetem Rastkörper (42) vom Einlass (56) trennt.

2. Sicherheitskupplung nach Anspruch 1, dadurch gekennzeichnet, dass das Wellrohr (38) mit dem gesamten von der Sicherheitskupplung zu übertragenden Drehmoment belastbar ist.

3. Sicherheitskupplung nach einem der Ansprüche 1 oder 2, dadurch gekennzeichnet, dass das Wellrohr (38) aus Federstahl oder anderem hoch belastbarem Metall (rostfreiem Stahl) besteht.

4. Sicherheitskupplung nach einem der Ansprüche 1 bis 3, dadurch gekennzeichnet, dass das Wellrohr (38) mit dem einen Ende an einem Flansch (30) des ortsfesten Kupplungsteils (28) und mit seinem entgegengesetzten Ende an einem Flansch (34) des Steuerschiebers (32) befestigt ist.

5. Sicherheitskupplung nach einem der Ansprüche 1 bis 4, dadurch gekennzeichnet, dass der Rastkörper (42) an einer der beiden Rastenanordnungen (40) einstückig ausgebildet ist.

6. Sicherheitskupplung nach einem der Ansprüche 1 bis 5, dadurch gekennzeichnet, dass der Rastkörper (42) von einer Feder (46) ständig im Sinne des Ausrückens belastet ist und von dieser Feder (46) vollständig ausgerückt gehalten wird, wenn der Zylinderraum (36) drucklos ist.

7. Sicherheitskupplung nach einem der Ansprüche 1 bis 6, dadurch gekennzeichnet, dass der Zylinderraum (36) durch einen Bypass (80, 82), der von einem Hilfssteuerglied (50) gesteuert ist, mit dem Einlass (56) verbindbar ist.

8. Sicherheitskupplung nach Anspruch 7, dadurch gekennzeichnet, dass der Steuerschieber (32) ein rohrförmiger Kolben ist, der auf einem axialen Fortsatz (20) einer der beiden Naben (10) geführt ist und dass das Hilfssteuerglied (50) in einer zentralen axialen Bohrung (48) des Fortsatzes (20) ebenfalls axial verschiebbar geführt ist.

9. Sicherheitskupplung nach Anspruch 8, dadurch gekennzeichnet, dass das Hilfssteuerglied (50) einen Druckknopf (52) aufweist, der axial aus einer freien Stirnfläche (54) des Fortsatzes (20) herausragt.

**Revendications**

1. Accouplement de sécurité pour transmissions rotatives, comportant
– un moyeu menant (10) et un moyeu (16) mené qui sont montés de manière à pouvoir tourner l'un par rapport à l'autre,
– deux dispositifs d'encliquetage (40, 44) qui sont reliés chacun à l'un des moyeux (10, 16) pour leur rotation commune,
– au moins un corps d'encliquetage (42) qui, dans une position encliquetée, accouple les deux dispositifs d'encliquetage (40, 44) entre eux et produit une force de débrayage (B) axiale, dépendant du couple de rotation transmis,
– un dispositif de serrage qui comporte une chambre de cylindre (36) à laquelle on envoie un fluide sous pression, à partir d'une entrée (56), aussi longtemps que le corps d'encliquetage (42) est encliqueté, afin de produire une force d'embrayage (C) qui peut être vaincue par la force de débrayage (B), lorsque le couple de rotation dépasse une valeur déterminée et
– un coulisseau de commande (32) qui est relié au corps d'encliquetage (42), pour un coulissement axial commun et raccorde la chambre de cylindre (36) à un canal de décharge (76) lorsque le corps d'encliquetage (42) est dégagé, au moins partiellement,
caractérisé en ce que la chambre de cylindre (36) est délimitée, radialement vers l'extérieur, par un tube ondulé (38), faisant ressort, qui relie le coulisseau de commande (32) à un élément d'accouplement (28), fixe axialement, relié au moyeu menant (10) et en ce que le coulisseau de commande (32) sépare la chambre de cylindre (36) de l'entrée (56), lorsque le corps d'encliquetage (42) est au moins partiellement dégagé.

2. Accouplement de sécurité selon la revendication 1, caractérisé en ce que le tube ondulé (38) peut supporter la totalité du couple de rotation à transmettre par l'accouplement de sécurité.

3. Accouplement de sécurité selon la revendication 1 ou 2, caractérisé en ce que le tube ondulé (38) est en acier à ressort ou en un autre métal hautement résistant (acier inoxydable).

4. Accouplement de sécurité selon une quelconque des revendications 1 à 3, caractérisé en ce que le tube ondulé (38) est fixé, par l'une de ses extrémités, à une bride (30) de l'élément d'accouplement (28) fixe et par son extrémité opposée, à une bride (34) du coulisseau de commande (32).

5. Accouplement de sécurité selon une quelconque des revendications 1 à 4, caractérisé en ce que le corps d'encliquetage (42) est formé d'une seule pièce sur l'un des deux dispositifs d'encliquetage (40).

6. Accouplement de sécurité selon une quelconque des revendications 1 à 5, caractérisé en ce que le corps d'encliquetage (42) est constamment soumis à l'action d'un ressort (46), dans le sens du débrayage et est maintenu totalement débrayé, par ce ressort (46), lorsque la chambre de cylindre (36) n'est pas sous pression.

7. Accouplement de sécurité selon une quelconque des revendications 1 à 6, caractérisé en ce que la chambre de cylindre (36) peut être reliée à l'entrée (56), par une dérivation (80, 82) qui est commandée par un organe auxiliaire de commande (50).

8. Accouplement de sécurité selon la revendication 7, caractérisé en ce que le coulisseau de commande (32) est un piston tubulaire qui est guidé sur un prolongement (20) axial de l'un des deux moyeux (10) et en ce que l'organe auxiliaire de commande (50) est guidé, axialement aussi, dans un perçage axial (48) central du prolongement (20).

9. Accouplement de sécurité selon la revendication 8, caractérisé en ce que l'organe auxiliaire de commande (50) comporte un bouton-poussoir (52) qui sort axialement d'une face frontale (54) libre du prolongement (20).

**Claims**

1. A safety clutch for rotating drives, having
- a driving and a driven hub (10, 16) which are mounted for rotation in relation to one another,
- two locking arrangements (40, 44), each of which is connected to one of the hubs (10, 16) for joint rotation,
- at least one detent member (42) which, in an engaged position, couples the two locking arrangements (40, 44) to one another and produces an axial disengaging force (B) depending on the transmitted torque,
- a loading device, which comprises a cylinder compartment (36) to which a fluid under pressure can be supplied from an inlet (56) so long as the detent member (42) is engaged, in order to produce an engaging force (C) which can be overcome by the disengaging force (B) if a certain torque is exceeded, and
- a distributing slide valve (32) which is connected to the detent member (42) for joint axial displacement and connects the cylinder compartment (36) to a relief passage (76) if the detent member (42) is at least partially disengaged, characterised in that the cylinder compartment (36) is bounded radially outwards by a resilient corrugated tube (38) which connects the distributing slide valve (32) to a clutch member (28) which is stationary in the axial direction and is connected to the driving hub, and that the distributing slide valve (32) disconnects the cylinder compartment (36) from the inlet (56) if the detent member (42) is at least partially disengaged.

2. A Safety clutch according to Claim 1, characterised in that the corrugated tube (38) can be loaded with all the torque to be transmitted by the safety clutch.

3. A safety clutch according to Claim 1 or 2, characterised in that the corrugated tube (38) consists of spring steel or another metal which can be highly stressed (stainless steel).

4. A safety clutch according to any one of Claims 1 to 3, characterised in that the corrugated tube (38) is secured by one end to a flange (30) of the stationary clutch member (28) and by its opposite end to a flange (34) of the distributing slide valve (32).

5. A safety clutch according to any one of Claims 1 to 4, characterised in that the detent member (42) is made integral with one of the two locking arrangements (40).

6. A safety clutch according to any one of Claims 1 to 5, characterised in that the detett member (42) is continuously loaded by a spring (46) in the disengagement sense and is held completely disengaged by this spring (46) if the cylinder compartment (36) is without pressure.

7. A safety clutch according to any one of Claims 1 to 6, characterised in that the cylinder compartment (36) can be connected to the inlet (56) through a by-pass (80, 82) which is controlled by an auxiliary control member (50).

8. A safety-clutch according to Claim 7, characterised in that the distributing slide valve (32) is a tubular piston which is guided on an axial extension (20) of one of the two hubs (10) and in that the auxiliary control member (50) is likewise guided for axial displacement in a central axial bore (48) in the extension (20).

9. A safety clutch according to Claim 8, characterised in that the auxiliary control member (50) comprises a push-button (52) which projects axially out of a free end face (54) of the extension (20).

Fig. 1

EP 0 285 770 B1

Fig. 2

Fig.3